# FASCICULE DE BREVET EUROPEEN

(11) **EP 0 801 930 B1**
(45) Date de publication et mention de la délivrance du brevet: **26.04.2006**
(21) Numéro de dépôt: 97470009.8
(22) Date de dépôt: 01.04.1997
(51) Int. Cl.: A61C 5/02

(54) **Alésoir dentaire à section de coupe tangentielle**
Zahnärtzliches Aufbereitungsinstrument mit tangentiellem Querschnitt
Dental reamer with tangential cross section

(30) Priorité: 17.04.1996 FR 9604987
(43) Date de publication de la demande: 22.10.1997
(73) Titulaire: Micro-Mega International Manufactures, 25000 Besancon (FR)
(72) Inventeur: Badoz, Jean-Marie, 25300 Doubs (FR); Euvrard, Hubert, 25870 Geneuille (FR); Calas, Paul, 31400 Toulouse (FR); Vulcain, Jean-Marie, 35500 Vitre (FR)
(74) Mandataire: Poupon, Michel

(56) Documents cités:
- WO-A-97/21392
- FR-A- 2 537 430
- US-A- 4 332 561
- US-A- 5 464 362

## Description

La présente invention a pour objet un alésoir dentaire s'amincissant jusqu'à sa pointe, du type comportant des cannelures hélicoïdales présentant au moins une lèvre coupante pour l'alésage des canaux dentaires.

On a déjà décrit des alésoirs dentaires que ce soit à une cannelure hélicoïdale, à deux cannelures hélicoïdales ou à triple cannelures hélicoïdales.

On a notamment décrit dans la demande de brevet 82 20903 un alésoir dentaire s'amincissant jusqu'à sa pointe, du type comportant des cannelures hélicoïdales comportant une triple cannelure hélicoïdale à pas progressif, de sorte que les espaces libres entre les lèvres coupantes augmentent au fur et à mesure que l'on s'éloigne de la pointe de l'alésoir vers le manche de celui-ci.

Même si ce brevet apporte une solution au problème des alésoirs dentaires à une cannelure hélicoïdale et à deux cannelures hélicoïdales, cette solution n'est que partielle.

En effet, la solution proposée dans la demande de brevet 82 20903 s'est avérée dans la pratique ne pas répondre entièrement au problème de vissage dans le canal à aléser lors du traitement canalaire en rotation continue.

La présente invention se propose de remédier à ces inconvénients en éliminant les effets de la rotation continue constatés dans l'utilisation des alésoirs de l'art antérieur, cette rotation continue étant à l'origine du vissage incriminé.

Conformément à l'invention, ce résultat est obtenu avec un alésoir dentaire s'amincissant jusqu'à sa pointe, du type comportant des cannelures hélicoïdales présentant au moins une lèvre de coupe caractérisée en ce que la tangente au point de coupe de l'instrument tend à se superposer à la tangente au diamètre du cercle dans lequel est inscrite une section de coupe et passant par ledit point de coupe.

De manière préférentielle, la tangente aux points de coupe de l'instrument est confondue à la tangente au diamètre du cercle dans lequel est inscrite une section de coupe de l' alésoir et passant par le point de coupe.

En outre, l'alésoir dentaire suivant l'invention pourra comporter au moins une cannelure hélicoïdale à pas progressif, par exemple une triple cannelure hélicoïdale à pas progressif, de manière telle que les espaces libres entre les lèvres coupantes augmentent au fur et à mesure que l'on s'éloigne vers le manche de celui-ci.

On comprendra mieux l'invention à l'aide de la description faite ci-après d'un mode de mise en oeuvre donné à titre d'exemple non limitatif, en référence aux dessins annexés dans lesquels :
- **les figures 1a et 2a** sont des vues de coupe de sections d'un alésoir suivant l'invention,
- **les figures 1b et 2b** sont des vues de coupe de sections d'un alésoir illustrant les différences de structures de l'art antérieur par rapport à l'invention illustrée aux figures 1a et 2a,

L'alésoir comporte de manière traditionnelle un manche et une tige se terminant par une pointe.

Dans les présents exemples, la tige comporte une triple cannelure hélicoïdale.

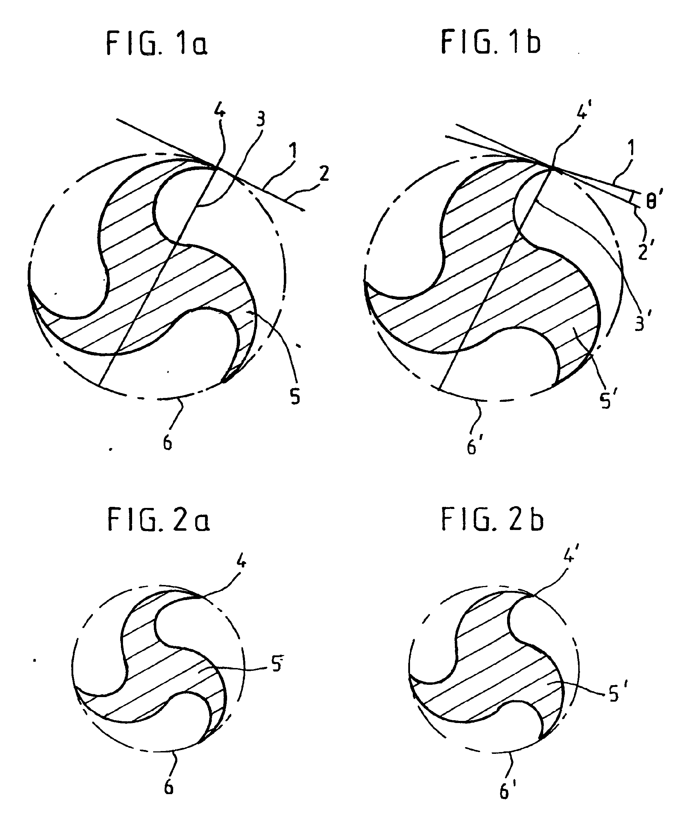

Comme on peut le voir sur la figure 1b, la tangente au point de coupe (4') de la section de coupe forme un angle (θ') avec la tangente (2') au diamètre (3') du cercle (7') où s'inscrit une section de coupe (8') de l'alésoir et passant par lesdits points de coupe.

Suivant la présente demande, cet angle (θ) entre la tangente (1) aux points de coupe (4) et la tangente (2) au diamètre (3) du cercle (7) où s'inscrit une section de coupe (8') de l'alésoir et passant par les points de coupe tend vers zéro.

On a illustré sur la figure la la situation où lesdites tangentes (1,2) sont confondues (θ = 0°).

On obtient ainsi une coupe d'alésage qui, de façon surprenante, évite toutes les rotations continues qui sont à l'origine du vissage observé dans l'art antérieur et ce, en gardant une excellente efficacité d'alésage aux alésoirs de l'invention.

## Revendications

1. Alésoir dentaire s'amincissant jusqu'à sa pointe, du type comportant des cannelures hélicoïdales présentant au moins une lèvre de coupe **caractérisée en ce que** la tangente (1) de la surface extérieure de la lèvre de coupe en un point P de cette surface tend, lorsque P tend vers le point de coupe (4), vers la tangente (2) au diamètre du cercle (6) dans lequel est inscrite une section de coupe (5) et passant par ledit point de coupe.

2. Alésoir dentaire selon la revendication 1, **caractérisé en ce que** la tangente aux points de coupe (4) de l'instrument est confondue à la tangente au diamètre du cercle (6) dans lequel est inscrite une section de coupe de l'alésoir et passant par le point de coupe (4).

3. Alésoir dentaire selon l'une des revendications 1 et 2, **caractérisé en ce qu'**il comporte au moins une cannelure hélicoïdale à pas progressif de manière telle que les espaces libres entre les lèvres coupantes augmentent au fur et à mesure que l'on s'éloigne dans le manche de celle-ci.

4. Alésoir dentaire selon la revendication précédente, **caractérisé en ce qu'**il comporte une triple cannelure hélicoïdale.

## Claims

1. Dental reamer tapering towards its tip, of the type comprising helical grooves which have at least one cutting edge, **characterised in that** the tangent (1) of the external surface of the cutting edge at a point P of this surface extends, when P extends towards the cutting point (4), towards the tangent (2) to the diameter of the circle (6) in which a cutting section (5) is inscribed and passes through said cutting point.

2. Dental reamer according to claim 1, **characterised in that** the tangent to the cutting points (4) of the instrument coincides with the tangent to the diameter of the circle (6) in which a cutting section of the reamer is inscribed and passes through the cutting point (4).

3. Dental reamer according to one of claims 1 and 2, **characterised in that** it comprises at least one helical groove with a gradual pitch such that the free spaces between the cutting edges increase progressively away from the handle of said reamer.

4. Dental reamer according to the preceding claim, **characterised in that** it comprises a triple helical groove.

## Patentansprüche

1. Zahnärztliches Aufbereitungsinstrument, das sich bis in seine Spitzenbereiche verjüngt, mit spiralförmigen Vertiefungen, die wenigstens eine Schneidlippe aufweisen, **dadurch gekennzeichnet, dass** die Tangente (1) der äußeren Oberfläche der Schneidlippe in einem Punkt P dieser Oberfläche bei Bewegen von P in Richtung der Schneidspitze (4) in Richtung der Tangente (2) an den Durchmesser des Kreises (6) wandert, in dem ein Schneidabschnitt (5) liegt, und durch den Schneidpunkt läuft.

2. Zahnärztliches Aufbereitungsinstrument nach Anspruch 1, **dadurch gekennzeichnet, dass** die Tangente an die Schneidpunkte (4) des Instrumentes in die Tangente an den Durchmesser des Kreises (6) übergeht, in dem der Schneidabschnitt des Aufbereitungsinstrumentes liegt, und durch den Schneidpunkt (4) läuft.

3. Zahnärztliches Aufbereitungsinstrument nach Anspruch 1 oder 2, **dadurch gekennzeichnet, dass** es wenigstens eine spiralförmige Vertiefung mit einer derart zunehmenden Steigung aufweist, dass die Freiräume zwischen den Schneidlippen in dem Maße zunehmen, wie man sich von dem Griff entfernt.

4. Zahnärztliches Aufbereitungsinstrument gemäß dem vorangehenden Anspruch, **dadurch gekennzeichnet, dass** es drei spiralförmige Vertiefungen aufweist.
